# EUROPEAN PATENT SPECIFICATION

(11) **EP 4 612 078 B1**
(45) Date of publication and mention of the grant of the patent: **25.02.2026**
(21) Application number: 24705038.8
(22) Date of filing: 10.01.2024
(51) Int. Cl.: B65G 45/16

(54) **CONVEYOR BELT SCRAPER WITH TORSION HOLDER**
FÖRDERBANDABSTREIFER MIT TORSIONSHALTERUNG
RACLEUR DE BANDE TRANSPORTEUSE AVEC SUPPORT DE TORSION

(30) Priority: 21.09.2023 ZA 202308925
(43) Date of publication of application: 10.09.2025
(73) Proprietor: BRELKO PATENTS (PTY) LTD, 2091 Johannesburg (ZA)
(72) Inventor: CHRISTIAN, Paul, 2091 Johannesburg (ZA)
(74) Representative: Patentanwälte Ruff, Wilhelm, Beier, Dauster & Partner mbB
(86) International application number: PCT/ZA2024/050001
(87) International publication number: WO 2025/065032

(56) References cited:
- US-A1- 2005 023 110
- US-A1- 2011 203 070
- US-A1- 2018 229 943
- US-B1- 6 681 919
- US-B2- 6 948 609
- US-B2- 9 586 765

## Description

### BACKGROUND OF THE INVENTION

This invention relates to a conveyor belt scraper.

US 2018/229943 anticipates the features of the preamble of independent claim 1, disclosing a conveyor belt scraper wherein a torsion holder with a belt scraping edge is pivotally movable about an axis of a member to which the torsion holder is mounted. In US6948609 discloses a similar conveyor belt scraper. Neither citation discloses an easy to implement procedure for aligning the torsion holder with a base to which the holder is fixed.

### SUMMARY OF THE INVENTION

The invention provides a conveyor belt scraper according to independent claim 1.

The first mounting member may include an axis and an outer surface which is radially spaced from the axis. The outer surface may be partly circular cylindrical.

The torsion holder may include a channel formation with an inner surface which is of complementary form to the circular cylindrical outer surface of the first mounting member.

A passage may be formed between opposing surfaces of the first mounting member and of the torsion holder e.g. by means of a recess and a hollow in the respective surfaces, and the locking member may be engaged therewith. Preferably the passage is between said inner surface and said outer surface.

The locking member may be resiliently deformable. The locking member may be elongate circular cylindrical.

Preferably the base includes a third mounting member which is spaced axially from the second mounting member and the torsion holder includes a second locating structure with a second locating passage which is axially aligned with the bore and the first locating passage.

The second mounting member and the third mounting member may be identical to the first mounting member but displaced axially from the first mounting member along the axis. Thus each mounting member may respectively include an outer surface (as described) and a recess in the outer surface.

Respective bores in the respective mounting members are coaxial and receive the shaft which also extends through the first locating passage and the second locating passage.

The locking member is operable to deform and allow a limited degree of rotational movement of the torsion holder arm, relative to the base, to take account of forces exerted on the scraping edge by material on a conveyor belt which is being cleaned and, thereafter, as the deforming force is released to act on the torsion holder arm and thereby restore the arm to a correct belt scraping position.

### BRIEF DESCRIPTION OF THE DRAWINGS

The invention is further described by way of example with reference to the accompanying drawings in which :
Figure 1 is a perspective view in exploded form of components of a conveyor belt scraper according to the invention,
Figure 2 is a side view on an enlarged scale compared to Figure 1, in cross section, of the conveyor belt scraper in an assembled configuration,
Figure 3 shows in perspective a lower side of a torsion holder arm included in the conveyor belt scraper; and
Figure 4 shows a modified scraper tip for the conveyor belt scraper.

### DESCRIPTION OF PREFERRED EMBODIMENT

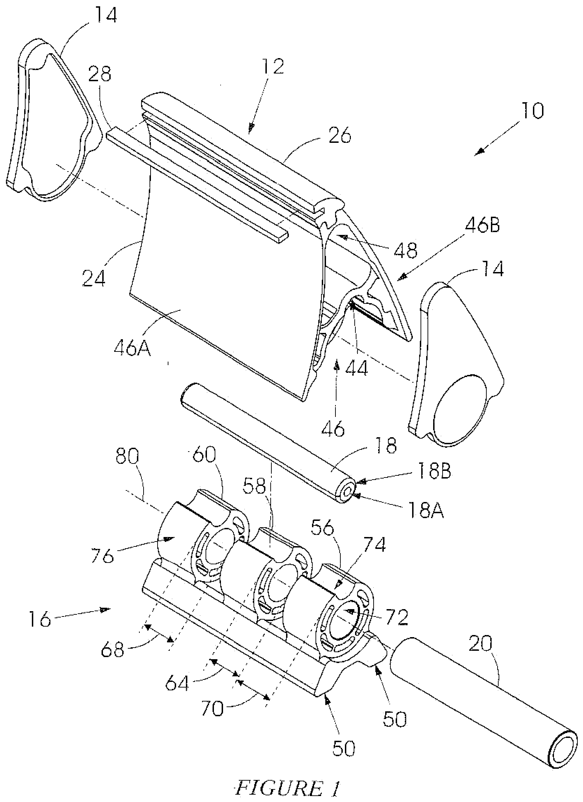

Figure 1 of the accompanying drawings illustrates in perspective components of a conveyor belt scraper 10 according to the invention, in exploded form.

The conveyor belt scraper 10 includes a torsion holder 12, end caps 14, a base 16, a locking member 18 and a shaft 20.

The locking member 18 is made from a resiliently deformable material such as a suitable grade of rubber, or of polyurethane.

The torsion holder 12 includes a torsion holder arm 24, an upper casting 26 which is engaged with the arm and a scraper tip 28 which is fixed to the casting 26.

The scraper tip 28 and the casting 26 are made from respective hard-wearing abrasion-resistant materials and comprise a belt scraping edge.

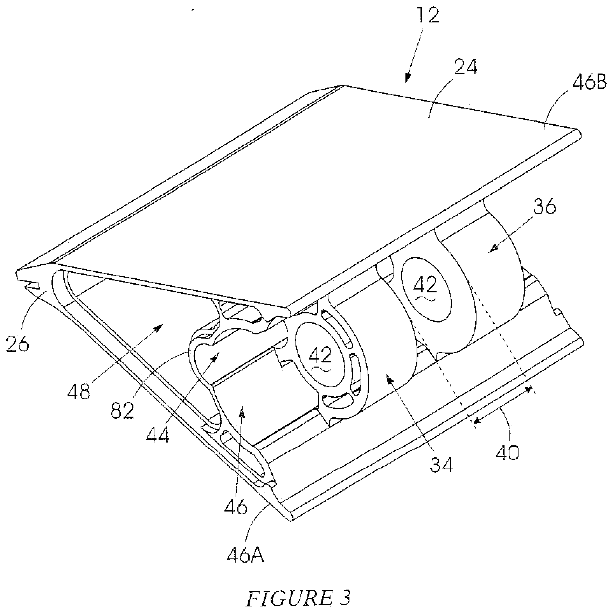

On a lower inner surface, see Figure 3, the torsion holder arm 24 has two locating structures 34 and 36 respectively which are axially spaced apart from each other by a distance 40. Each locating structure is formed with a respective locating passage 42. These passages are axially aligned with each other. A downwardly facing hollow 44 which in cross section is semicircular, lies above the locating structures. The semicircular shape is preferred but a hollow with a different cross sectional shape may also function satisfactorily.

The locating structures 34, 36 are flanked by wing sections 46A and 46B respectively which define a downwardly facing channel formation 46 within which the locating structures 34, 36 are positioned.

The end caps 14 are designed to engage with a tight fit with respective open ends 48 of the arm 24.

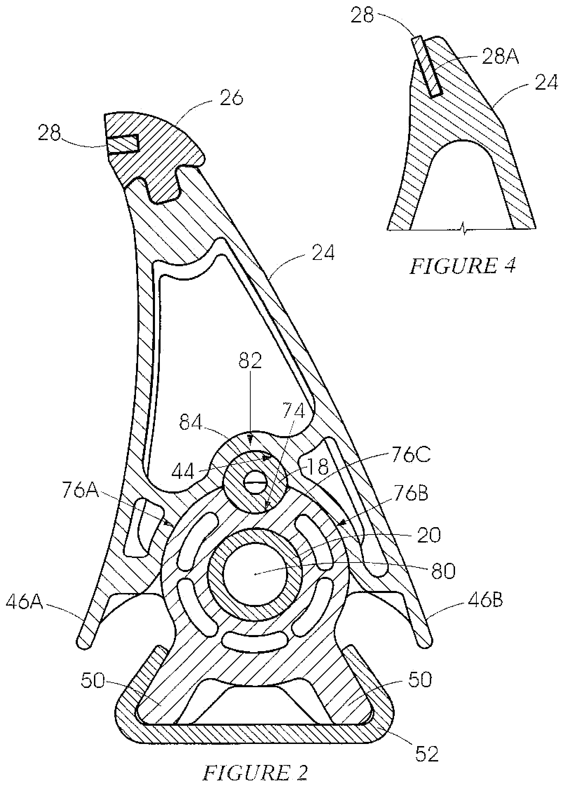

The base 16 has retention formations 50 which are engageable with a sliding action with an external support 52 which is of complementary form to the base, as is shown in Figure 2. This arrangement allows the conveyor belt scraper 10 to be correctly positioned across the width of a conveyor belt upon which the belt scraper 10 acts.

Three mounting members 56, 58 and 60 respectively are located on upper sides of the retention formations 50. These mounting members are substantially identical to each other. The first and second members 56 and 58 are spaced apart by a distance 64. The second and third mounting members 58 and 60 are spaced apart by a distance 68 which is equal to the distance 64. Each mounting member has a width 70. The dimension 70 is slightly less than the distance 40 shown in Figure 3.

Each mounting member 56, 58, 60 has a respective bore 72 of circular cross section, and a respective recess 74 in an upper part of an outer surface 76. The bores are in axial alignment with one another. The recesses 74 are aligned with each other in a longitudinal direction. An upper portion of the outer surface 76 has a generally circular cylindrical shape except for the recess 74. The outer surface 76 is centred on and is radially spaced from a longitudinally extending axis 80 which passes through the aligned bores 72 in the mounting members.

Each bore 72 has a diameter which is equal to the diameter of each locating passage 42 and of the shaft 20.

When the torsion holder arm 24 is positioned on the base 16 the locating structures 34 and 36 fit closely between the first mounting member 56 and the second mounting member 58, and between the second mounting member 58 and the third mounting member 60, respectively. The locating passages 42 in the locating structures are axially aligned with the bores 72 in the three mounting members. The shaft 20 is inserted, moving along the axis 80, into the aligned bores 72 and the locating passages 42.

The wing sections 46A and 46B extend downwardly on opposed sides of the mounting members 56, 58 and 60, and of the locating structures 34, 36.

The recesses 74, on upper parts of the outer surfaces 76, oppose the downwardly facing hollow 44 in the torsion holder arm 24 thereby to form respective passages 84 which are in axial alignment and which extend parallel to the axis 80. The passages 84 have diameters which are equal to the outer diameter of the locking member 18. The locking member 18 is then pushed into the passages 84. The end caps 14 are engaged with the open ends 48 of the torsion holder arm 24 thereby to seal its interior against the ingress of dirt and foreign material.

Figure 2 shows that the inner sides of the wing sections 46A and 46B and of a cross piece 82, which is above the mounting members and the locating structures, abut circular portions 76A, 76B and 76C of the outer surfaces 76 of the mounting members and locating structures.

Figure 2 illustrates, in an assembled form, the use of the casting 26 to which the scraper tip 28 is fixed. The casting 26 is, in turn, securely attached to an upper end of the torsion holder arm 24. In an alternative arrangement shown in Figure 4 the casting 26 is not employed and the scraper tip 28 is located in a slot 28A which extends the width of the torsion holder arm and the tip is thereby directly secured to the torsion holder arm 24.

The channel formation 46 extends around portions of the outer surfaces of the mounting members.

In use the conveyor belt scraper 10 is mounted so that the scraper tip 28 is in scraping contact with a conveyor belt surface (not shown) which is to be cleaned. This aspect is conventional and therefore is not further described herein.

In use of the Figure 2 embodiment or the Figure 4 embodiment, force which is exerted on the scraper tip 28, and hence on the arm 24 by movement of the conveyor belt, tends to rotate the torsion holder arm 24 in a clockwise direction about the axis 80 (referring to Figure 2). The locking member 18, which is made from a resiliently deformable material such as a hard rubber or polyurethane, acts to resist such rotation but can deflect slightly as the force on the scraper tip increases. The locking member 18 then restores the arm 24 to a correct scraping position with the tip 28 in scraping contact with the conveyor belt surface. This process allows an effective belt scraping action to be maintained continuously but with the capability of the scraping edge to deflect slightly when the force which is exerted on the scraping edge by material on the conveyor belt increases.

The inner sides of the wing sections 46A and 46B rotate slightly about the circular outer surfaces 76 of the mounting members 56, 58 and 60. As noted the locking member 18 deforms slightly with this movement. This rotating movement is accompanied by a corresponding small degree of rotation of the locating structures 34, 36 which are between the associated pairs of the mounting members, about the shaft 20 which is centred on the axis 80.

The extent of this relative rotational movement is restrained or controlled by the size and by the type of material of the locking member 18 which is deformed slightly as the torsion holder arm tends to rotate about the mounting members on the base and which then restores the torsion holder arm to a correct scraping position.

In cross section the locking member 18 is of annular form and its deformation characteristics are additionally dependent on the size of a central passage 18A and on the thickness of a wall 18B around the passage 18A. The external diameter of the locking member, the thickness of the wall 18B, the diameter of the passage 18A and the material from which the locking member is made are important parameters which are chosen to control the force versus deflection relationship, in a circular sense, of the torsion holder arm.

The conveyor belt scraper 10 in use thus, to the extent possible, is held in firm scraping contact with a moving conveyor belt surface. Although the permitted degree of deflection of the belt scraping edge of the scraper tip is limited by the locking member 18, when a hard material on the belt surface is brought into contact with the belt scraping edge, damage to the scraper 10 is generally restricted without adversely affecting scraping efficiency.

## Claims

1. A conveyor belt scraper (10) comprising a base (16) which includes a retention formation (50) configured to be engaged with an external support (52) and at least a first mounting member (56), a torsion holder (12), with a belt scraping edge (26, 28), which is engaged with the first mounting member (56) and which is rotatable to a limited extent relative to the first mounting member (56), and a locking member (18) which, in use, restricts rotational movement of the torsion holder (12) relative to the first mounting member (56) **characterized in that** the base (16) includes a bore (72) which extends axially through the first mounting member (56), and the torsion holder (12) includes a first locating structure (34) with a first locating passage (42) which is axially aligned with the bore (72), and a shaft (20) which is located in the bore (72) and in the first locating passage (42).

2. The conveyor belt scraper (10) of claim 1 wherein the first mounting member (56) includes an axis (80) and an outer surface (76) which is partly circular cylindrical.

3. The conveyor belt scraper (10) of claim 2 wherein the torsion holder (12) includes a channel formation (46) with an inner surface which is of complementary form to the circular cylindrical outer surface (76) of the first mounting member (56).

4. The conveyor belt scraper 10 of claim 1 wherein a passage (84) is formed between opposing surfaces of the first mounting member (56) and of the torsion holder (12) and the locking member (18) is engaged with the passage (42).

5. The conveyor belt scraper (10) of claim 4 wherein the locking member (18) is resiliently deformable.

6. The conveyor belt scraper (10) of claim 5 wherein the locking member (18) is elongate circular cylindrical and in cross section is of annular form.

7. The conveyor belt scraper (10) of claim 1 wherein the base (16) includes a second mounting member (58) which is spaced axially from the first mounting member (56), the bore (72) extending axially through the second mounting member (58), and the first locating structure (34) is positioned between the first mounting member (56) and the second mounting member (58).

8. The conveyor belt scraper (10) of claim 7 wherein the base (16) includes a third mounting member (60) which is spaced axially from the second mounting member (58), the bore (72) extending axially through the third mounting member (60) and the torsion holder (12) includes a second locating structure (36) which is positioned between the second mounting member (58) and the third mounting member (60), the second locating structure (36) including a second locating passage (42) which is axially aligned with the bore (72) and the first locating passage (42) and the shaft (20) is located in the first locating passage (42) and the second locating passage (42) and in the respective bores (72) in the respective mounting members (59, 58, 60).

9. The conveyor belt scraper (10) of claim 1 wherein the locking member (18) is resiliently deformable and restricts rotational movement of the torsion holder (12) relative to the mounting members (56, 58, 60).

## Patentansprüche

1. Förderbandabstreifer (10), umfassend eine Basis (16), die eine Halteausbildung (50), die dazu ausgelegt ist, mit einer externen Stütze (52) und mindestens einem ersten Montageelement (56) in Eingriff zu kommen, einen Torsionshalter (12) mit einer Bandabstreifkante (26, 28), der mit dem ersten Montageelement (56) in Eingriff steht und relativ zu dem ersten Montageelement (56) in einem begrenzten Ausmaß drehbar ist, und ein Verriegelungselement (18), das im Gebrauch die Drehbewegung des Torsionshalters (12) relativ zu dem ersten Montageelement (56) einschränkt, beinhaltet, **dadurch gekennzeichnet, dass** die Basis (16) eine Bohrung (72) beinhaltet, die sich axial durch das erste Montageelement (56) erstreckt, und der Torsionshalter (12) eine erste Lokalisierungsstruktur (34) mit einem ersten Lokalisierungsdurchgang (42), der axial zu der Bohrung (72) ausgerichtet ist, und eine Welle (20), die sich in der Bohrung (72) und in dem ersten Lokalisierungsdurchgang (42) befindet, beinhaltet.

2. Förderbandabstreifer (10) nach Anspruch 1, wobei das erste Montageelement (56) eine Achse (80) und eine Außenfläche (76), die teilweise kreiszylindrisch ist, beinhaltet.

3. Förderbandabstreifer (10) nach Anspruch 2, wobei der Torsionshalter (12) eine Kanalausbildung (46) mit einer Innenfläche beinhaltet, die komplementär zu der kreiszylindrischen Außenfläche (76) des ersten Montageelements (56) ausgebildet ist.

4. Förderbandabstreifer 10 nach Anspruch 1, wobei ein Durchgang (84) zwischen gegenüberliegenden Flächen des ersten Montageelements (56) und des Torsionshalters (12) gebildet ist und das Verriegelungselement (18) mit dem Durchgang (42) in Eingriff steht.

5. Förderbandabstreifer (10) nach Anspruch 4, wobei das Verriegelungselement (18) elastisch verformbar ist.

6. Förderbandabstreifer (10) nach Anspruch 5, wobei das Verriegelungselement (18) länglich kreiszylindrisch und im Querschnitt ringförmig ist.

7. Förderbandabstreifer (10) nach Anspruch 1, wobei die Basis (16) ein zweites Montageelement (58) beinhaltet, das axial von dem ersten Montageelement (56) beabstandet ist, wobei sich die Bohrung (72) axial durch das zweite Montageelement (58) erstreckt und die erste Lokalisierungsstruktur (34) zwischen dem ersten Montageelement (56) und dem zweiten Montageelement (58) positioniert ist.

8. Förderbandabstreifer (10) nach Anspruch 7, wobei die Basis (16) ein drittes Montageelement (60) beinhaltet, das axial von dem zweiten Montageelement (58) beabstandet ist, wobei sich die Bohrung (72) axial durch das dritte Montageelement (60) erstreckt und der Torsionshalter (12) eine zweite Lokalisierungsstruktur (36) beinhaltet, die zwischen dem zweiten Montageelement (58) und dem dritten Montageelement (60) positioniert ist, wobei die zweite Lokalisierungsstruktur (36) einen zweiten Lokalisierungsdurchgang (42) beinhaltet, der axial mit der Bohrung (72) und dem ersten Lokalisierungsdurchgang (42) ausgerichtet ist, und die Welle (20) in dem ersten Lokalisierungsdurchgang (42) und dem zweiten Lokalisierungsdurchgang (42) und in den jeweiligen Bohrungen (72) in den jeweiligen Montageelementen (59, 58, 60) angeordnet ist.

9. Förderbandabstreifer (10) nach Anspruch 1, wobei das Verriegelungselement (18) elastisch verformbar ist und die Drehbewegung des Torsionshalters (12) relativ zu den Montageelementen (56, 58, 60) beschränkt.

## Revendications

1. Racleur de bande transporteuse (10) comprenant une base (16) qui comprend une formation de retenue (50) conçue pour être en prise avec un support externe (52) et au moins un premier élément de montage (56), un support de torsion (12), avec un bord de raclage de bande (26, 28), qui est en prise avec le premier élément de montage (56) et qui peut tourner dans une mesure limitée par rapport au premier élément de montage (56), et un élément de verrouillage (18) qui, lors de l'utilisation, limite le mouvement de rotation du support de torsion (12) par rapport au premier élément de montage (56), **caractérisé en ce que** la base (16) comprend un alésage (72) qui s'étend axialement à travers le premier élément de montage (56), et le support de torsion (12) comprend une première structure de positionnement (34) avec un premier passage de positionnement (42) qui est aligné axialement avec l'alésage (72), et un arbre (20) qui est situé dans l'alésage (72) et dans le premier passage de positionnement (42).

2. Racleur de bande transporteuse (10) selon la revendication 1, le premier élément de montage (56) comprenant un axe (80) et une surface extérieure (76) qui est partiellement cylindrique circulaire.

3. Racleur de bande transporteuse (10) selon la revendication 2, le support de torsion (12) comprenant une formation de canal (46) dotée d'une surface intérieure qui est de forme complémentaire à la surface extérieure cylindrique circulaire (76) du premier élément de montage (56).

4. Racleur de bande transporteuse (10) selon la revendication 1, un passage (84) étant formé entre des surfaces opposées du premier élément de montage (56) et du support de torsion (12) et l'élément de verrouillage (18) étant en prise avec le passage (42).

5. Racleur de bande transporteuse (10) selon la revendication 4, l'élément de verrouillage (18) étant déformable élastiquement.

6. Racleur de bande transporteuse (10) selon la revendication 5, l'élément de verrouillage (18) étant cylindrique circulaire allongé et en coupe transversale étant de forme annulaire.

7. Racleur de bande transporteuse (10) selon la revendication 1, la base (16) comprenant un deuxième élément de montage (58) qui est espacé axialement du premier élément de montage (56), l'alésage (72) s'étendant axialement à travers le deuxième élément de montage (58), et la première structure de positionnement (34) étant positionnée entre le premier élément de montage (56) et le deuxième élément de montage (58).

8. Racleur de bande transporteuse (10) selon la revendication 7, la base (16) comprenant un troisième élément de montage (60) qui est espacé axialement du deuxième élément de montage (58), l'alésage (72) s'étendant axialement à travers le troisième élément de montage (60) et le support de torsion (12) comprenant une seconde structure de positionnement (36) qui est positionnée entre le deuxième élément de montage (58) et le troisième élément de montage (60), la seconde structure de positionnement (36) comprenant un second passage de positionnement (42) qui est aligné axialement avec l'alésage (72) et le premier passage de positionnement (42) et l'arbre (20) étant situé dans le premier passage de positionnement (42) et le second passage de positionnement (42) et dans les alésages (72) respectifs des éléments de montage (59, 58, 60) respectifs.

9. Racleur de bande transporteuse (10) selon la revendication 1, l'élément de verrouillage (18) étant déformable élastiquement et limitant le mouvement de rotation du support de torsion (12) par rapport aux éléments de montage (56, 58, 60).
